# EUROPEAN PATENT SPECIFICATION

(11) **EP 0 854 780 B1**
(45) Date of publication and mention of the grant of the patent: **05.04.2000**
(21) Application number: 96929477.6
(22) Date of filing: 20.09.1996
(51) Int. Cl.: B29C 49/42, B29C 49/12, B29C 49/58, B29C 49/06

(54) **MACHINE FOR THE PRODUCTION OF RECEPTACLES OF PLASTIC MATERIAL**
VORRICHTUNG ZUR HERSTELLUNG VON BEHÄLTERN AUS KUNSTSTOFFMATERIAL
MACHINE DE PRODUCTION DE RECEPTACLES EN MATIERE PLASTIQUE

(30) Priority: 10.10.1995 CH 287895
(43) Date of publication of application: 29.07.1998
(73) Proprietor: Tetra Laval Holdings & Finance SA, 1009 Pully (CH)
(72) Inventor: COLLOMBIN, André-Marcel, CH-1290 Versoix (CH)
(74) Representative: Micheli & Cie
(86) International application number: IB9600969
(87) International publication number: WO9713632

(56) References cited:
- EP-A- 0 296 825
- EP-A- 0 387 737
- EP-A- 0 637 499
- FR-A- 2 457 171
- GB-A- 2 097 322
- GB-A- 2 137 923
- US-A- 5 137 443
- PATENT ABSTRACTS OF JAPAN vol. 009, no. 198 (M-404), 15 August 1985 & JP,A,60 061228 (MITSUBISHI JUSHI KK), 9 April 1985,

## Description

The present invention relates to a machine for the production of receptacles of plastic material comprising a frame and arranged along a transport path, at least one heating device and a device for molding by draw-blowing, receptacles being staped from preforms disposed on supports, the device for molding by draw-blowing comprising at least one blowing nozzle provided with a draw rod, each support being provided with a holding member, comprising means for coating with the external surface of the neck of the preform, the draw rod being guided by at least one guide member, a blowing space being formed outside said draw rod.

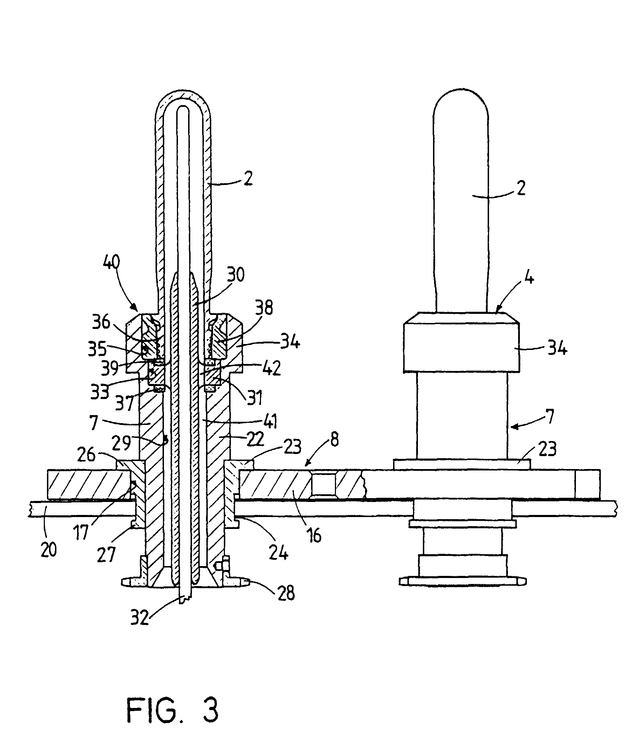

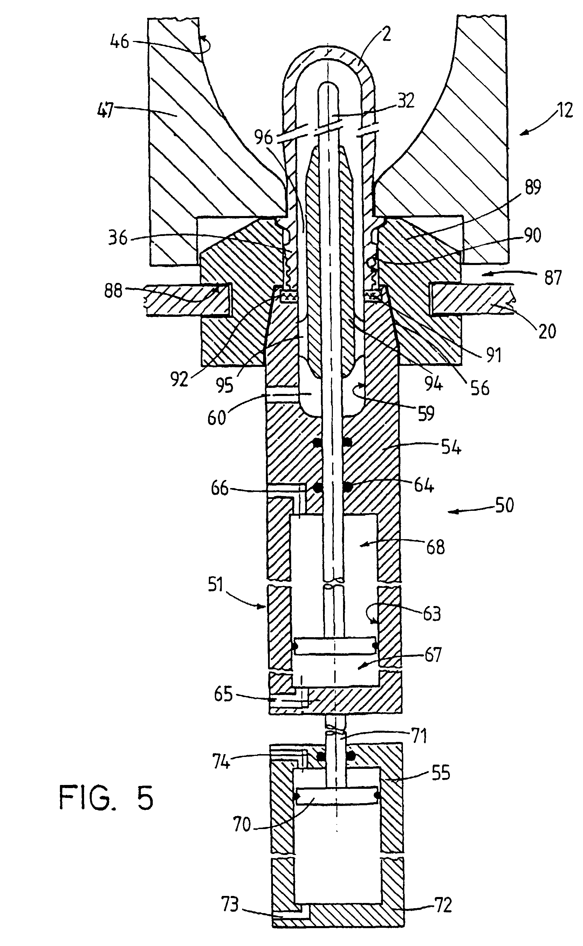

A machine of this type is disclosed in document GB-A-2.097.322 which is considered to be the closest prior art document. This machine comprises with reference to figures 3 and 5 a chuck on which the preforms are held neck upwards by a gripper assembly coating with the external surface of the preform reck. A draw rod is mounted and guided inside the chuck.

The latter comprises a front part or nose which produtrudes inside the neck of the preform and comes into contact with the internal surface of the neck. The preform is therefore hold on chuck on both sides of its neck, outside by the gripper assembly and inside by the protruding nose.

The pressurized expansion air is injected in the preform through a passace between the draw rod and the chuck. The latter has a splined internal surface. The nose protuding into the neck comprises on its internal surface surrounding the draw rod four recesses or splines through which the expansion air is injected into the preform. Thus the blowing space is delimited on its inner side by the draw rod and on its outer side by the nose of support or chuck.

The machine disclosed in GB-A-2.097.322 has therefore several major disadvantages. The blowing space has a very limited section, allowing only a low blowing flow rate, rendering the blowing operation difficult and long. The draw rod is guided by the protruding parts of the splined nose, which allows only a limited guiding precision. The frontal nose of the chuck is inserted into the neck of the preform which is prejudicial to cleanliness and sterility of the produced articles. Further treatments of the interfor surface of the neck cannot be carried out without first removing the preform from its support.

Another draw-blowing machine is described in document DE 27 42 693 C2 and comprises an introduction device in which preforms are disposed on spindles bearing on the internal surface of the neck of the preforms. The preforms are heated on a rotitins whell, taken up by a transfer wheel to be disposed with their spindle on a blowing wheel. In a draw-blowing member associated with the blowing wheel, a draw rod passes through the spindle through an annular space comprised between the draw rod and the spindle. In this construction, the spindel is in contact with the internal surface of the neck of the preform, which is prejudicial from a point of view of cleanliness and sterility of the produced receptacles. Moreover, the neck of the preform is not protected in the heating device and can accordingly be deformed during heating.
Given that the spindle is in contact with the interior of the neck, treatments (washing, sterililzation) of the interior of the preform or of the receptacle produced cannot be carried out without first removing the preform from the spindle.

Another drawback of the known device resides in the fact that the introduction of the blowing air between the blowing rod and the spindle permits only a small cross section for blowing, hence a low blowing flow rate, rendering the blowing operation difficult and long. Because of the existence of an annular blowing space provided directly about the draw rod, this latter is not precisely guided in its movement, which prevents the production of high precision receptacles.

The present invention has for its ojects to overcome the above-mentioned drawbacks and to provide a machine for the production of hich precision receptacles, of increased reliability of high output, permitting a sure transportation and high cleanliness of the preforms and produced receptacles and facilitating other treatments of the preforms and produced receptacles. The invention is characterized to this end by the fact that said blowing space is constituted by a cylindrical blowing space delimited on its inner side by the external surface of the guiding member and on its outer side by the neck of preform, the internal surface of said neck forming over the entire length of the neck the outer surface of said cylindrical blowing space, the guide member being with its internal surface in contact with the entire circonference of the draw rod.

There is thus obtained a large cross section for the blowing air, hence a high blowing flow rate whilst enjoying very precise guiding of the draw rod, which permits high output production and very high precision. The neck of the preform is solely maintained by its external surface, which permits high cleanliness and sterility. Other treatments of the interior of the preform and of the produced receptacles can be carried out without removing the preform or the receptacle from the support during all the production and treatment operations.

Preferably, the guide member is constituted by a tubular cylindrical member delimiting with the internal surface of the neck of the preform said cylindrical blowing space.

There is thus obtained a blowing air flow which is particularyl efficacious.

According to a preferred embodiment, easch support is constituted by a tubular body whose lower part is adapted to enter into contact with the blowing nozzle and whose upper portion is arranged so as to maintain the neck of the preform by its external surface, the tubular body comprising a central bore whose wall is connected by radial bridges to the guide member to form the cylindrical blowing space delimited by the wall of the central bore and the guide member.

With these characteristics, there is obtained a very simple and effective construction of the support for the preforms and for guidance of the draw rod.

Preferably, the guide member is connected by radial bridges to a securement ring disposed in a second bore through the support of a diameter greater than that of said central bore.

With these characteristics, the guide member for the draw rod can be changed very easily, which permits easy adaptation of the support to different types of draw-blowing devices and very rapid and easy repairs and assembly.

According to a preferred embodiment, the neck of the preform is disposed in a third bore of the support, a retaining ring being interposed between the wall of the third bore and the external surface of the preform neck, the internal surfaces of the neck of the preform, the securement ring and the central bore being substantially aligned to constitute with the guide member said cylindrical blowing space.

These characteristics ensure excellent holding of the preform on the support. This latter can be easily adapted to preforms of different types. Its mounting is rendered very quick and easy. The passage of the blowing air toward the preform can take place freely and with a high flow rate.

According to a preferred modification, the external holding member is constituted by at least two gripping members adapted to be applied about the external surface of the neck of the preform and about the upper portion of the support, the gripping member is being maintained in position by means of resilient gripping members.

The preform and the produced receptacle are thus particularly well secured on the support, which can be adapted to different types of preforms.

According to another embodiment, the blowing nozzle comprises a blowing chamber connected to a source of fluid under pressure, the guide member being connected by radial bridges to the blowing chamber to constitute said cylindrical blowing space delimited by the guide member and the wall of the blowing chamber.

The guide member is, in this embodiment, secured to the blowing nozzle, which permits particularly precise guidance and a reduced number of guide members.

Preferably, the blowing nozzle comprises in its upper portion a sealing joint, the neck of the preform being in contact with the upper surface of said joint, when the blowing nozzle is urged in the direction of the lower surface of the support, the internal surfaces of the neck, -of the sealing joint and of the blowing chamber being adapted to be substantially aligned to constitute with the guide member said cylindrical blowing space.

These characteristics permit a particularly simple construction and very reliable operation because the sealing joint can be controlled very easily.

Other advantages will become apparent from the characteristics set forth in the dependent claims and the description setting forth the invention hereafter more in detail with the aid of drawings which represent schematically and by way of example two embodiments and a modification.

Figure 1 is a perspective view of a machine for the production of receptacles of plastic material, according to the invention.

Figure 2 is a partial cross-sectional view of a first embodiment of a device for molding by draw-blowing used in the machine shown in Figure 1.

Figure 3 is a fragmentary cross-sectional view of a carrier with two supports for preforms.

Figure 4 is a fragmentary cross-sectional view of a modified carrier for the preforms.

Figure 5 is a cross-sectional view of a second embodiment of a device for molding by draw-blowing.

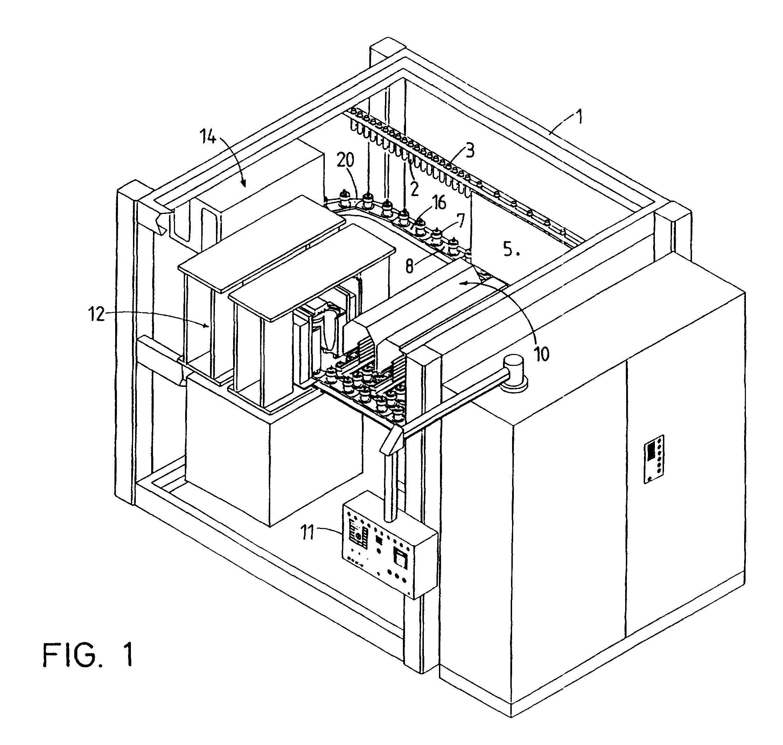

With reference to Figure 1, the machine for the production of receptacles in plastic material comprises a frame 1 on which the various devices and members of the machine are mounted in modular fashion. Preforms 2 for the receptacles to be produced are supplied by means of a double rail 3 (Figure 1) forming an inclined plane to end in an inverting loading device 5, in which the preforms are inverted and disposed neck down in the supports 7 carried by double carriers 8, each carrier carrying two supports 7.

The preforms are then heated in a heating device 10 and brought to a device for draw-blowing molding 12. After their formation, the produced receptacles are raised from the support 7 in an inverting discharge device 14, from which they can be treated for their future utilization. Alternatively, the receptacles could also be brought on double carriers 8 to stations for sterilization, filling, labelling, packaging, etc.

The empty supports 7 carried by the carriers 8 are then brought to the loading device 5 for the preforms.

With reference to Figures 1 and 3, the carriers 8 are constituted by plates 16 of elongated rectangular shape with rounded ends comprising two bores 17 in which the supports 7 are held axially. The plates 16 rest laterally on a continuous guide track 20 comprising two lateral rails and mutually touch to form a closed circuit. The movement of the carriers 8 on the guide track is obtained by pressure by means of jacks (not shown).

Each support 7 comprises a tubular body 22 retained axially in a bearing 23 engaged in the bores 17 of the plate 16. The bearing 23 has an annular groove 24 adapted to coact with the rails of the guide track 20 to be there maintained. The plate 16 and the rails of the guide track 20 on which the plate 16 rests, are retained between two projections 26, 27 of the bearing 23. This construction permits very rapid mounting of the carriers 8 and of the supports 7 on the guide track 20 and ensures excellent guidance and maintenance of the carriers 8 on the guide track 20.

The supports 7 are, at their lower end, secured to a drive pinion 28 adapted to coact with a pulley or a drive chain provided at the heating device 10 to be driven in rotation about their central axis.

Each support 7 comprises a central bore 29 and is provided with a tubular guide member 30 adapted to guide precisely a draw rod 32 forming a part of the draw-blowing molding device 12. The tubular guide member 30 is retained secured to the internal wall of the support 7 by a securement ring 31 to which it is connected by radial bridges 42. The securement ring 31 is inserted in a bore 33 of the support 7 whose diameter is greater than that of the central bore 29.

The support 7 has an upper portion 34 of larger diameter having a third bore 35 adapted to receive the neck 36 of a preform 2 disposed neck down in the support 7. A retaining ring 38 is moreover inserted between the neck 36 and the bore 35 and ensures firm holding of the preform 2 in the support 7. Two sealing joints 37 and 39 are disposed between the securement ring 31 and the support 7, on the one hand, and between the securement ring 31 and the preform 2 and the retaining ring 38 on the other hand.

The upper portion 34 of larger diameter of the support 7 thus forms with the retaining ring 38 an external securement member 40 of the neck of the preform 2 whose internal surface remains entirely free.

A cylindrical space 41 of large cross section is provided between the tubular guide member 30 and the internal wall of the support 7 and of the preform 2, permitting a large flow to act by blowing during draw-blowing. It is to be noted that the internal surfaces of the neck 36 of the preform 2, of the securement ring 31 and of the central bore 29 are substantially aligned to constitute with the tubular guide member said cylindrical space 41 for blowing.

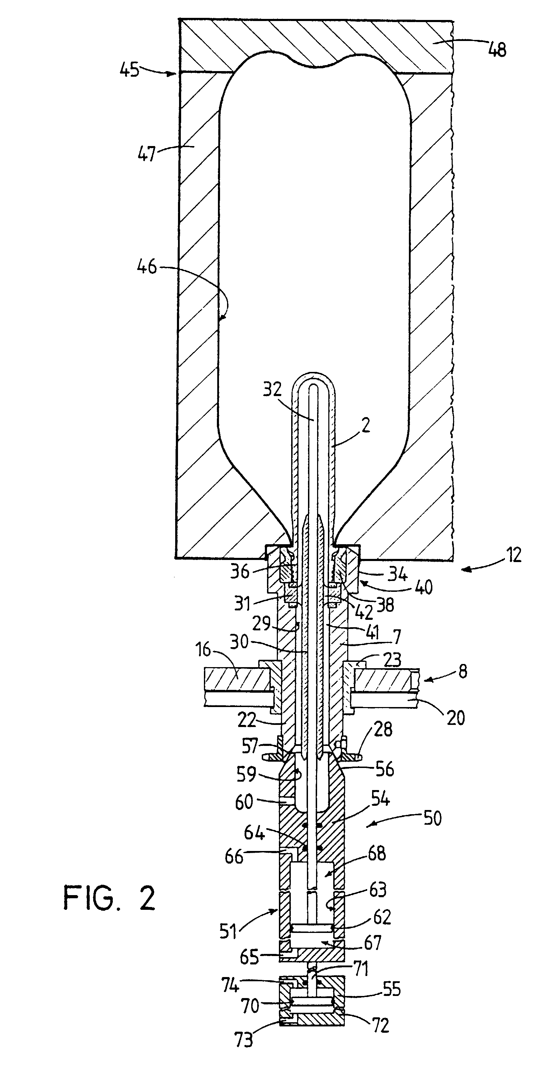

With reference to Figure 2, the device for molding by draw-blowing 12 comprises a molding member 45 comprising a certain number of mold cavities 46, preferably three. As the machine has preferably two juxtaposed devices 12 for molding by draw-blowing, six receptacles disposed on three double carriers 8 can be made simultaneously. Each molding member 45 is constituted by two half-molds 47 and a mold cover 48. The lower portion of the two half-molds 47 coacts with the upper surface of the support 7 and with the neck 36 of the preform 2 to maintain the assembly in place during the operation of molding by draw-blowing.

In the lower portion of each device 12 for molding by draw-blowing is arranged a blowing-drawing station 50 comprising three blowing-drawing members 51. Each blowing-drawing member 51 has a blowing nozzle 54 which can be displaced vertically by means of an engagement jack 55 from an active position such as is shown in Figure 2, toward an inactive position. This blowing nozzle 54 is provided with a conical front end 56 fitting in the active position in sealed relation to the lower end 57 of corresponding shape of the tubular body 22 of the support 7. A blowing chamber 59 is on the one hand in communication with a source of fluid under pressure by means of a blowing conduit 60 and, on the other hand, with the cylindrical blowing space 41 such that the blowing fluid or air can enter at a high flow rate into the preform 2 and the receptacle in the course of formation.

The draw-blowing rod 32 is slidably mounted in the blowing nozzle 54 and secured at its lower end to an actuating piston 62 disposed in an actuating cylindrical 63. Two O-rings 64 surrounding the blow-drawing rod 32 ensure sealing between the blowing chamber 59 and the actuating cylinder 63. The movements of the drawing-blowing rod 32 are obtained by the action of sources of fluids adapted to be connected to the actuating conduits 65, 66 emptying into lower and upper chambers 67, 68 of the actuating cylinder 63. The source of fluid adapted to be connected to the conduit 65 is preferably identical to that connected to the blowing conduit 60, so as to obtain a forceful drawing adapted to the deformation caused by the blowing air.

The blowing nozzle 54 is guided in its vertical movement by guide members (not shown) secured to the draw-blowing device 12. The engagement jack 55 comprises a piston 70 with a control rod 71 secured to the blowing nozzle 54 and which is disposed in a fixed cylinder 72. Two conduits 73, 74 are adapted to be connected to a source of fluid under pressure to displace the blowing nozzle between active and inactive positions.

Thanks to the tubular guide member 30 coacting with the draw-blowing rod 32, the movement of this latter is perfectly controlled and centered, which permits the production of receptacles of high precision.

The blowing air is moved between the tubular body 22 and the preform 2, on the one hand, and the guide member 30 on the other hand. This permits a blowing section of large surface, therefore a very effective blowing flow rate.

The neck 36 of the preform 2 is maintained entirely by its external surface thanks to the external securement member 40. This permits increasing the conditions of cleanliness and of sterility of the produced receptacles. The external securement member ensures very good protection of the neck 36 of the preform 2 during heating in the heating device 10, thus avoiding deformations that would be harmful to the neck. The internal surface of the neck of the preform and of the produced receptacle remain free during all the production operations, which makes possible other treatments, such as washing or sterilization of the receptacle.

The external securement member 40 serves as a holding member for the preform 2 and of the produced receptacle during all the course of production. There are thus avoided changes of carriers 8, of supports 7 or of securement members 40, which renders the transportation of the preforms very certain and simple, and increases the reliability and rationalization of the machine.

When it is desired to change the type of receptacles to be produced, the same supports 7 can be used. For certain types of preforms, it then suffices to change only the retaining ring 38 such that this latter will be adapted exactly to the neck 36 of the preform 2 that is used.

Moreover, the draw-blowing operation is rapidly carried out given that the blowing nozzle 51 can be engaged by a small displacement along the lower portion of the support 7, which, after formation of the receptacle and retraction of the blowing nozzle, is disengaged very rapidly on the guide track 20.

The particular construction of the guide member 30 and of its securement ring 31 permit very rapid and easy assembly and repairs. It is moreover easily possible to adapt the guide member 30 to all draw-blowing devices.

The operation of the device for molding by draw-blowing of the machine is as follows: in the inactive or rest position, the blowing nozzle 54 is located in a position offset downwardly in Figure 2. The two half-molds 47 and the cover 48 are separated. The carriers 8, the supports 7 and the heated preforms 2 are brought along the guide track 20 into the molding device 12. The half-molds 47 and the- cover 48 are closed, the lower portion of the half-molds 47 holding in place the supports 7 and the necks 36 of the preforms. Air under pressure is introduced by the conduit 73 of the jack 55 which displaces the blowing nozzle 54 into its active position. Then, the air under pressure is introduced by conduits 60 and 65 into the blowing chamber 59 and the lower chamber 67 of the actuating cylinder 63.

Air under pressure thus enters at a high flow rate into the preform 2 and the draw rod 32 is displaced upwardly, until the receptacle will be entirely closed. Then, the blowing chamber is evacuated by the conduit 60. Air under pressure is introduced via conduits 66 and 74 into the chamber 63 and into the jack 55 to displace the draw rod 32 and the blowing nozzle 54 downwardly into inactive position, in which the carriers 8 can bring receptacles to a discharge station after opening the mold member 45. The whole of the production operation is controlled by an electronic control unit 11 (Figure 1).

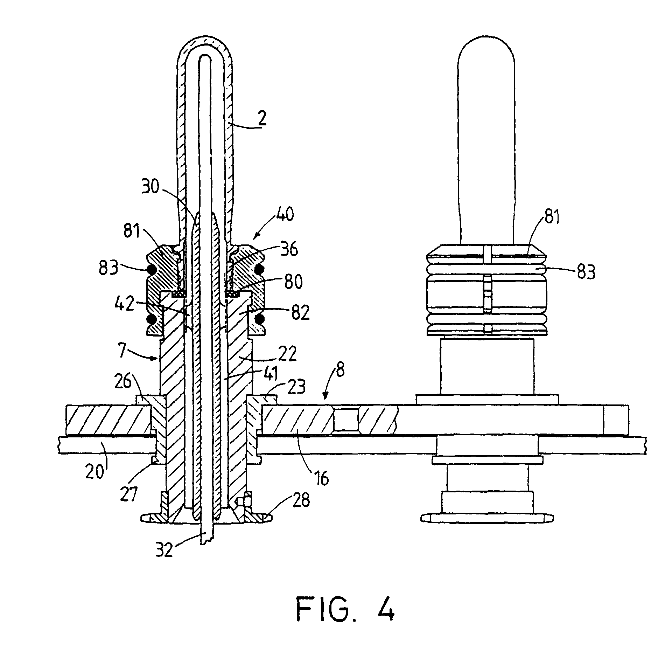

The modification shown in Figure 4 comprises a double carrier and supports 7 similar to those of Figure 3, whilst the external securement member 40 is of another construction. In this modification, the neck 36 of the preform 2 rests on the tubular body 22 of the support 7 by means of a sealing joint 80. The external securement member 40 is constituted by at least two gripping members 81 applied about the external surface of the neck 36 and about the-upper portion 82 of the support 7. These gripping members 81 are maintained in position by means of resilient gripping members 83 in the form of 0-rings or metallic circular springs surrounding the gripping members 81. This modification permits a particularly sure holding of the preforms 2 on the supports 7, whilst leaving free the internal surface of the preforms.

The embodiment shown in Figure 5 comprises supports 87 sliding on rails of the guide track 20 engaged in a circular groove 88 of the supports. The latter also have a tubular body 89 with a central bore 90. An annular sealing joint 91 is secured in an internal groove 92 of the front portion of the blowing nozzle 54. The preform 2 rests by its neck 36 on the support 87 and is retained on the support 87 by the wall of the central bore 30 bearing against the external surface of the neck 36 of the preform 2.

In the device for molding by draw-blowing, the lower portion of the two half-molds 47 coacts with the upper portion of the support 87 and with the neck 36 of the preform 2 to maintain the whole in place during the operation of molding by draw-blowing.

The blow-drawing members 51 are similar to those described with reference to Figure 2. In the engaged active position, the blowing nozzle 54 enters by means of the annular sealing joint 91 into contact with the neck 36 of the preform 2. The principal characteristic of this embodiment resides in the fact that the tubular guide member 94 for the draw-blowing rod is secured to the blowing nozzle 54 and not to the support for the preforms. Thus, this guide member 94 is connected by radial bridges 95 to the surface of the blowing chamber 59 which is substantially aligned with the internal surface of the sealing joint 92 and of the neck 36 of the preform 2. It will be noted that the cylindrical blowing space 96, arranged between the tubular guide member 94 and the supports 7 or the preform 2, also has a large cross section ensuring an effective blowing flow rate. The tubular guide member 9 secured to the blowing nozzle 54 also permits drawing with a high precision and stability.

Of course the embodiments described above are in no way limiting and can be the subject of all desirable modifications within the framework defined by claim 1. In particular, the machine could have more than one guide member for the draw-blowing rod connected to the support 7 and/or to the blowing nozzle 54 and arranged so as to form a cylindrical blowing space 41, 96 between the guide member and the internal surface of the preform 2. These guide members could have many other suitable adequate shape, ribbed longitudinally, etc., but ensure by their interior surface a precise guiding of the draw-blowing rod 32.

The guide members could have another construction with another number of mold cavities and partial molds.

The shape of the carriers 8 and the supports 7 for the preforms 2 could be different. The external securement member 40 could be constituted by any means adapted to hold the neck of the preform 2 by its external surface alone, in or on the support 7. One could thus conceive of grippers articulated on the support 7 and shaped so as to close automatically about the external surface of the neck 36, when the preform 2 is applied with a predetermined pressure against the support 7.

## Claims

1. Machine for the production of receptacles of plastic material comprising a frame (1) and arranged along a transport path (20), at least one heating device (10) and a device (12) for molding by draw-blowing, receptacles being shaped from preforms (2) disposed on supports (7,87), the device (12) for molding by draw-blowing comprising at least one blowing nozzle (54) provided with a draw rod (32), each support being provided with a holding member (40,90), comprising means for coacting with the external surface of the neck (36) of the preform (2), the draw rod (32) being guided by at least one guide member (30, 94), a blowing space being formed outside said draw rod, characterized by the fact that said blowing space is constituted by a cylindrical blowing space (41,96) delimited on its inner side by the external surface of the guide member (30, 94) and on its outer side by the neck (36) of the preform (2), the internal surface of said neck (36) forming over the entire length of the neck (36) the outer surface of said cylindrical blowing space (41,96), the guide member (30,94) being with its internal surface in contact with the entire circonference of the draw rod (32).

2. Machine according to claim 1, characterized by the fact that the guide member is constituted by a tubular cylindrical member (30,94) delimiting with the internal surface of the neck (36) of the preform (2) said cylindrical blowing space (41,96), said preform being disposed neck down on the supports (7,87).

3. Machine according to claim 1 or claim 2, characterized by the fact that each support (7) is constituted by a tubular body (22) whose lower portion (57) is adapted to enter into contact with the blowing nozzle (54) and whose upper portion (34) is arranged so as to hold the neck (36) of the preform (2) by its external surface, the tubular body (22) comprising a central bore (29) whose wall is connected by radial bridges (32) to the guide member (30) to form the cylindrical blowing space (41) delimited by the wall of the central bore (29) and the guide member (30).

4. Machine according to claim 3, characterized by the fact that the guide member (30) is connected by the radial bridges (42) to a securement ring (31) disposed in a second bore (33) of the support (7) of a diameter greater than said central bore (29).

5. Machine according to claim 3 or 4, characterized by the fact that the neck (36) of the preform (2) is disposed in a third bore (35) of the support (7), a retaining ring (38) being interposed between the wall of the third bore (35) and the external surface of the neck (36) of the preform (2), the internal surfaces of the neck (36) of the preform (2), of the securement ring (31) and of the central bore (29) being substantially aligned to constitute with the guide member (30) said cylindrical blowing space (41).

6. Machine according to claim 3, characterized by the fact that the external holding member (40) is constituted by at least two gripping members (81) adapted to be applied about the external surface of the neck (36) of the preform (2) and about the upper portion (82) of the support (7), the gripping members (81) being maintained in position by means of elastic gripping members (83).

7. Machine according to one of claims 3 to 6, characterized by the fact that the tubular body (22) is surrounded and retained axially by a bearing (23), of which at least two external lateral projections (26, 27) coact with a carrying member (16) and with rails of a continuous guide track (20) forming said transport path and along which the carrier members (16) are displaced.

8. Machine according to claim 1 or 2, characterized by the fact that the blowing nozzle (54) comprises a blowing chamber (59) connected to a source of fluid under pressure, the guide member (94) being connected by radial bridges (95) to a wall of the blowing chamber (59) to constitute said cylindrical blowing space (96) delimited by the guide member (94) and the wall of the blowing chamber (59).

9. Machine according to one of claims 1, 2 or 8, characterized by the fact that the blowing nozzle (54) comprises at its upper portion a sealing joint (92), the neck (36) of the preform (2) being in contact with the upper surface of said joint, when the blowing nozzle (54) is urged in the direction of the lower surface of the support, the internal surfaces of the neck (36) of the sealing joint (92) and of the blowing chamber (59) being adapted to be substantially aligned to constitute with the guide member (94) said cylindrical blowing space (96).

10. Machine according to one of the preceding claims, characterized by the fact that it comprises at least one jack (55) adapted to control the movements of the blowing nozzle or nozzles (54) which are adapted to be displaced from an active position in which they coact with the supports (7, 87), toward an inactive position, in which all their portions are disengaged from the supports (7, 87) and vice versa.

## Patentansprüche

1. Maschine für die Herstellung von Kunststoffgefässen mit einem Rahmen (1) und zumindest einer Heizvorrichtung (10) und einer Vorrichtung (12) für die Formung durch Zieh-Blasen, die entlang eines Förderpfades (20) angeordnet sind, wobei die Gefässe von Vorformlingen (2) ausgehend geformt werden, die auf Stützen (7, 87) angeordnet sind, die Vorrichtung (12) für die Formung durch Zieh-Blasen zumindest eine mit einer Zugstange (32) versehene Gebläsedüse (54) umfasst, jede Stütze mit einem Halteglied (40, 90) versehen ist, das Mittel für ein Zusammenwirken mit der Aussenseite des Halses (36) des Vorformlings (2) umfasst, die Zugstange (32) durch zumindest ein Führungsglied (30, 94) geführt wird und ein Blaseraum ausserhalb der benannten Zugstange gebildet wird, dadurch gekennzeichnet, dass der benannte Blaseraum von einem zylindrischen Blaseraum (41, 96) gebildet wird, der auf seiner Innenseite durch die Aussenseite des Führungsgliedes (30, 94) und auf seiner Aussenseite durch den Hals (36) des Vorformlings (2) begrenzt wird, wobei die Innenseite des benannten Halses (36) über die gesamte Länge des Halses (36) hinweg die Aussenseite des benannten zylindrischen Blaseraumes (41, 96) bildet und das Führungsglied (30, 94) mit seiner Innenseite mit der gesamten Peripherie der Zugstange (32) in Berührung steht.

2. Maschine nach Anspruch 1, dadurch gekennzeichnet, dass das Führungsglied von einem röhrenförmigen, zylindrischen Glied (30, 94) gebildet wird, das zusammen mit der Innenseite des Halses (36) des Vorformlings (2) den benannten zylindrischen Blaseraum (41, 96) begrenzt, wobei der benannte Vorformling mit dem Hals nach unten auf den Stützen (7, 87) angeordnet ist.

3. Maschine nach Anspruch 1 oder Anspruch 2, dadurch gekennzeichnet, dass jede Stütze (7) aus einem röhrenförmigen Körper (22) besteht, dessen unterer Abschnitt (57) geeignet ist, mit der Gebläsedüse (54) in Berührung zu treten, und dessen oberer Abschnitt (34) so angeordnet ist, dass er den Hals (36) des Vorfonnlings (2) an seiner Aussenseite hält, wobei der röhrenförmige Körper (22) eine zentrale Bohrung (29) umfasst, deren Wandung durch radiale Brücken (32) mit dem Führungsglied (30) verbunden ist, um den von der Wandung der zentralen Bohrung (29) und dem Führungsglied (30) begrenzten zylindrischen Blaseraum (41) zu bilden.

4. Maschine nach Anspruch 3, dadurch gekennzeichnet, dass das Führungsglied (30) durch die radialen Brücken (42) mit einem Befestigungsring (31) verbunden ist, der in einer zweiten Bohrung (33) der Stütze (7) angeordnet ist, die einen grösseren Durchmesser als die benannte zentrale Bohrung (29) hat.

5. Maschine nach Anspruch 3 oder 4, dadurch gekennzeichnet, dass der Hals (36) des Vorformlings (2) in einer dritten Bohrung (35) der Stütze (7) angeordnet ist, wobei ein Haltering (38) zwischen die Wandung der dritten Bohrung (35) und die Aussenseite des Halses (36) des Vorformlings (2) eingefügt ist und die Innenseiten des Halses (36) des Vorformlings (2), des Befestigungsringes (31) und der zentralen Bohrung (29) im wesentlichen abgefluchtet sind, um zusammen mit dem Führungsglied (30) den benannten zylindrischen Blaseraum (41) zu bilden.

6. Maschine nach Anspruch 3, dadurch gekennzeichnet, dass sich das äussere Halteglied (40) aus zumindest zwei Greifgliedern (81) zusammensetzt, die geeignet sind, um die Aussenseite des Halses (36) des Vorformlings (2) und den oberen Abschnitt (82) der Stütze (7) herum angesetzt zu werden, wobei die Greifglieder (81) durch elastische Greifglieder (83) an Ort und Stelle gehalten werden.

7. Maschine nach einem der Ansprüche 3 bis 6, dadurch gekennzeichnet, dass der röhrenförmige Körper (22) von einem Lager (23) umgeben und durch dieses axial gehalten wird, von dem zumindest zwei seitliche äussere Vorsprünge (26, 27) mit einem Trägerglied (16) sowie mit Schienen einer durchgehenden Führungsbahn (20) zusammenwirken, die den benannten Förderpfad bildet, entlang dessen die Trägerglieder (16) verschoben werden.

8. Maschine nach Anspruch 1 oder 2, dadurch gekennzeichnet, dass die Gebläsedüse (54) eine Gebläsekammer (59) umfasst, die mit einer Quelle von Fluid unter Druck verbunden ist, wobei das Führungsglied (94) durch radiale Brücken (95) mit einer Wand der Gebläsekammer (59) verbunden ist, um den benannten zylindrischen Blaseraum (96) zu bilden, der durch das Führungsglied (94) und die Wand der Gebläsekammer (59) begrenzt wird.

9. Maschine nach einem der Ansprüche 1, 2 oder 8, dadurch gekennzeichnet, dass die Gebläsedüse (54) in ihrem oberen Abschnitt eine Dichtung (92) umfasst, wobei der Hals (36) des Vorformlings (2) mit der Oberseite der benannten Dichtung in Berührung steht, wenn die Gebläsedüse (54) zum Unterseite der Stütze hin ausgerichtet wird, und die Innenseiten des Halses (36), der Dichtung (92) und der Gebläsekammer (59) geeignet sind, im wesentlichen abgefluchtet zu werden, um zusammen mit dem Führungsglied (94) den benannten zylindrischen Blaseraum (96) zu bilden.

10. Maschine nach einem der vorangehenden Ansprüche, dadurch gekennzeichnet, dass sie zumindest eine Winde (55) umfasst, die geeignet ist, die Bewegungen der Gebläsedüse oder düsen (54) zu steuern, die dazu geeignet sind, von einer aktiven Stellung, in der sie mit den Stützen (7, 87) zusammenwirken, in eine passive Stellung, in der alle ihre Abschnitte von den Stützen (7, 87) losgelöst sind, und umgekehrt verschoben zu werden.

## Revendications

1. Machine pour la fabrication de récipients en matière plastique comprenant un châssis (1) et, agencés le long d'un parcours de transport (20), au moins un dispositif de chauffage (10) et un dispositif de moulage par étirage-soufflage (12), les récipients étant formés à partir de préformes (2) disposées sur des supports (7,87), le dispositif de moulage par étirage-soufflage (12) comprenant au moins un bec de soufflage (54) muni d'une tige d'étirage (32), chaque support étant muni d'un organe de maintien (40,90) comprenant des moyens destinés à coopérer avec la surface extérieure du col (36) de la préforme (2), la tige d'étirage (32) étant guidée par au moins une pièce de guidage (30,94), un espace de soufflage étant formé à l'extérieur de ladite tige d'étirage, caractérisée par le fait que cet espace de soufflage est constitué par un espace de soufflage cylindrique (41,96) délimité sur son côté intérieur par la surface extérieure de la pièce de guidage (30,94) et sur son côté extérieur par le col (36) de la préforme (2), la surface intérieure dudit col (36) formant sur la longueur entière du col (36) la surface extérieure dudit espace cylindrique de soufflage (41,96), la pièce de guidage (30,94) étant par sa surface intérieure en contact avec la circonférence entière de la tige d'étirage (32).

2. Machine selon la revendication 1, caractérisée par le fait que la pièce de guidage est constituée par une pièce cylindrique tubulaire (30,94) délimitant avec la surface intérieure du col (36) de la préforme (2) ledit espace cylindrique de soufflage (41,96), ladite préforme étant disposée col en bas sur les supports (7,87).

3. Machine selon la revendication 1 ou la revendication 2, caractérisée par le fait que chaque support (7) est constitué par un corps tubulaire (22) dont la partie inférieure (57) est destinée à entrer en contact avec le bec de soufflage (54) et dont la partie supérieure (34) est agencée de façon à maintenir le col (36) de la préforme (2) par sa surface extérieure, le corps tubulaire (22) comportant un alésage central (29) dont la paroi est reliée par des ponts radiaux (42) à la pièce de guidage (30) pour former l'espace cylindrique de soufflage (41) délimité par la paroi de l'alésage central (29) et la pièce de guidage (30).

4. Machine selon la revendication 3, caractérisée par le fait que la pièce de guidage (30) est reliée par les ponts radiaux (42) à un anneau de fixation (31) logé dans un second alésage (33) du support (7) de diamètre plus grand que ledit alésage central (29).

5. Machine selon la revendication 3 ou 4, caractérisée par le fait que le col (36) de la préforme (2) est disposé dans un troisième alésage (35) du support (7), une bague de retenue (38) étant intercalée entre la paroi du troisième alésage (35) et la surface extérieure du col (36) de la préforme (2), les surfaces intérieures du col (36) de la préforme (2), de l'anneau de fixation (31) et de l'alésage central (29) étant sensiblement alignées pour constituer avec la pièce de guidage (30) ledit espace cylindrique de soufflage (41).

6. Machine selon la revendication 3, caractérisée par le fait que l'organe de maintien externe (40) est constitué par au moins deux pièces de serrage (81) destinées à être appliquées autour de la surface extérieure du col (36) de la préforme (2) et autour de la partie supérieure (82) du support (7), les pièces de serrage (81) étant maintenues en position au moyen d'organes élastiques de serrage (83).

7. Machine selon l'une des revendications 3 à 6, caractérisée par le fait que le corps tubulaire (22) est entouré et retenu axialement par un palier (23), dont au moins deux saillies latérales extérieures (26,27) coopèrent avec un organe transporteur (16) et avec des rails d'un chemin de guidage continu (20) formant ledit parcours de transport et le long duquel les organes transporteurs (16) sont déplacés.

8. Machine selon la revendication 1 ou 2, caractérisée par le fait que le bec de soufflage (54) comprend une chambre de soufflage (59) reliée à une source de fluide sous pression, la pièce de guidage (94) étant reliée par des ponts radiaux (95) à une paroi de la chambre de soufflage (59) pour constituer ledit espace cylindrique de soufflage (96) délimité par la pièce de guidage (94) et la paroi de la chambre de soufflage (59).

9. Machine selon l'une des revendications 1, 2 ou 8, caractérisée par le fait que le bec de soufflage (54) comprend à sa partie supérieure un joint d'étanchéité (92), le col (36) de la préforme (2) étant en contact avec la surface supérieure dudit joint, lorsque le bec de soufflage (54) est sollicité en direction de la surface inférieure du support, les surfaces intérieures du col (36), du joint d'étanchéité (92) et de la chambre de soufflage (59) étant agencées de façon à être sensiblement alignées pour constituer avec la pièce de guidage (94) ledit espace cylindrique de soufflage (96).

10. Machine selon l'une des revendications précédentes, caractérisée par le fait qu'elle comprend au moins un vérin (55) destiné à commander les déplacements du ou des becs de soufflage (54) qui sont susceptibles d'être déplacés d'une position active dans laquelle ils coopèrent avec les supports (7,87), vers une position inactive, dans laquelle toutes leurs parties sont dégagées des supports (7,87) et vice-versa
